# EUROPEAN PATENT APPLICATION

(11) **EP 2 169 271 A2**
(43) Date of publication of application: **31.03.2010**
(21) Application number: 09170904.8
(22) Date of filing: 22.09.2009
(51) Int. Cl.: F16H 48/20, F16H 48/22, F16H 48/28

(54) **Limited slip differential**

(30) Priority: 17.09.2009 US 561848; 25.09.2008 TW 97217350 U; 25.09.2008 CN 200820138057 U
(71) Applicant: Horizon Hobby Inc., Champaign IL Illinois 61822 (US)
(72) Inventor: Hissam, Daniel Stephen, Romoland, CA 92585 (US)
(74) Representative: Kuhn, Daniela

(57) **Abstract**

A limited slip differential (10) for use in model cars includes a pair of pressure plates (40) installed within a housing (20) and a differential element (50) is located between the pressure plates (40), so that when the rotation speed of a drive wheel (60,70) of the model car increases, the differential element (50) will move toward against the pressure plates (40) causing gear racks of the differential element (50) to frictionally contact the shafts of the helical gears (54) on a cross shaft (52). This lowers the rotation speed of the helical gears (54), while at the same time separately lowers the rotation speed of the drive wheel (60,70), and raises the rotation speed of the other drive wheel (70,60) allowing the model car to be able to turn at high speed.

## Description

### BACKGROUND AND SUMMARY OF THE INVENTION

The present invention relates to a differential, and more specifically, to a type of limited slip differential preferably for use in remote controlled model cars.

If the rotation speeds of the inside and outside drive wheels of a remote controlled model car are the same when a model car turns on a track, difficulty in turning the model car may result. Therefore, the power transmission system in model cars is usually equipped with a differential which permits the rotation speed of the outer drive wheel of the model car which traces a wider arc to be faster than the rotation speed of the inner side drive wheel. This enables the car to be able to smoothly negotiate the turn.

However, when one of these drive wheels of the model car encounters a slippery location it can spin and/or skid. This is also true of the inside wheel when the car is negotiating a turn. Moreover, the action of centrifugal force when the model car negotiates dramatic turns may also cause the inner drive wheel to leave the track and rotate in space. When any of these occur, the conventional differential will transfer all of the power to the drive wheel which is spinning or rotating in space, which causes the other drive wheel to lose driving force. This results in the vehicle becoming prone to flipping or to lose speed.

If a conventional differential of the kind used in full size cars is installed in model cars for racing, the operator normally will continuously give the model car drive power in the hope that the car they are operating will be able to turn quickly and yield a good result under conditions where seconds can make the difference, for example in a race. However, as discussed above, the power provided by the operator will likely be transferred by the conventional differential to a wheel which is simply spinning or rotating in space and therefore the result of continually applying power to the model car makes the car lose turning speed. This phenomenon is called "diffing out".

Because the largest segment of remote controlled model cars are run in off road conditions on tracks with limited traction, the need arises to control such "diffing out". Model car manufacturers have utilized a viscous oil type differential that uses various viscosity silicone oils to create a fluid shear force to combat sudden loss of traction due to "duffing out". As the planetary gears rotate, the fluid shear force in the oil increases exponentially, and prevents traction from being lost. A heavier viscosity silicone oil prevents the differential from "diffing out", but sacrifices turning ability. The converse is true as a lighter viscosity silicone oil accommodates turns, but acceleration is lost when exiting a turn and vehicle acceleration is compromised. The ideal oil viscosity for the conditions encountered by the model car is determined by trial and error testing and requires the operator to disassemble the differential and experiment with different viscosity oils. Moreover, even the ideal viscosity of the oil will vary with temperature.

In the invention as described herein a limited slip differential is provided which allows one of the drive wheels to be able to receive power while the other drive wheel rotates in space or spins, thereby effectively solving the above described problems, In the present invention this is achieved by automatically varying the mechanical friction between certain mechanical components of the differential, rather than the viscosity or shear force of oil, and therefore avoids the need to test, experiment with and choose the correct oil viscosity for the purpose and the disassembly and reassembly of the differential, and the effects of temperature changes are minimized.

The primary objective of the present invention is to provide a type of limited slip differential for use in model cars which is capable of limiting the rotation speed difference between the two drive wheels to within a set degree, and permitting one of the drive wheels to obtain power to propel the vehicle forward when the other drive wheel is rotating in space or spinning, to facilitate the negotiation of a turn, and to improve the acceleration when coming out of a turn. In order to achieve these objectives, the limited slip differential of the present invention preferably includes a housing, a main gear, a pair of pressure plates, a differential element and a pair of wheel drive shafts. The inside of the housing has a chamber which contains the pressure plates and the differential element. The main gear connects to the housing and seals the housing and chamber. The differential element is positioned between the pair of pressure plates so as to be able to act against the pressure plates. The differential element also has a cross shaft, a multiplicity of helical gears, gear racks and multiple elastic elements. The cross shaft has four termini or ends upon which the helical gears are mounted. The gear racks are positioned on both sides of the cross shaft, and the gear racks respectively have multiple indentations which move to contact the shafts of the helical gears. Each elastic element bears against the faces of the gear racks, and acts to push the gear racks in opposite directions away from each other. The wheel drive shafts extend through the main gear and the housing, and each respectively has a transmission gear, and the transmission gears are mated to the helical gears. The differential element produces a torque and acts against the pressure plates when the rotation speed of one of the drive wheels is excessively fast, and as a result of this torque the gear racks at this time will draw closer to the cross shaft, positioning the indentations of the gear racks closer into frictional engagement with the shafts of the helical gears, lowering the rotation speed of the helical gears. This in turn lowers the rotation speed of the drive wheel with excessive rotation speed through the meshing with the transmission gear, while at the same time raises the rotation speed of the other drive wheel, controlling the rotation speed differential between the two drive wheels to within a set degree.

These and other objects, features and advantages of the present invention will be more clearly understood through a consideration of the following detailed description.

### BRIEF DESCRIPTION OF THE DRAWINGS

In the course of this description, reference will frequently be made to the attached drawings in which:

FIG. 1 is a broken, perspective view of a preferred embodiment of differential of the invention;

FIG. 2 is an exploded, perspective view of the differential as substantially shown in FIG. 1;

FIG. 3 is a partially broken, side elevation view of the preferred embodiment of the differential;

FIG. 4 is a cross-sectioned, side elevation view of the differential as substantially shown in FIG. 3;

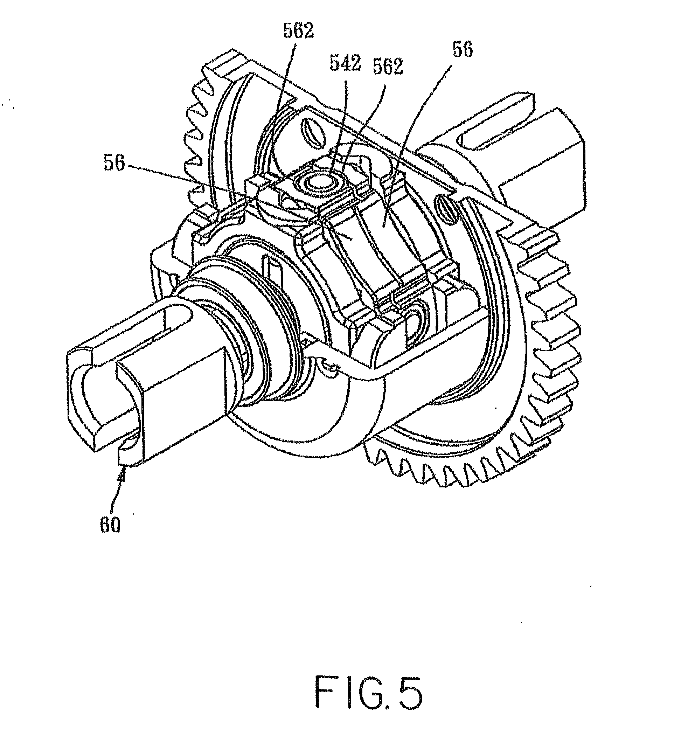

FIG. 5 is an enlarged, broken, perspective view of the differential as substantially shown in FIG. 1; and

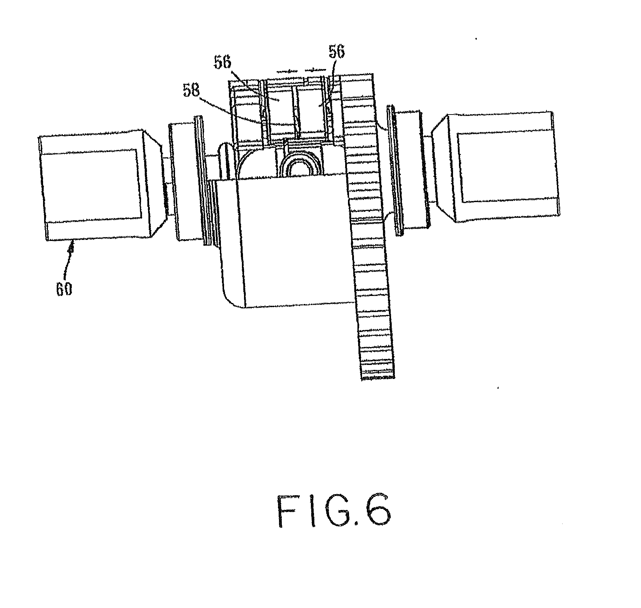

FIG. 6 is a reduced, partially broken, side elevation view of the differential as substantially shown in FIG. 3.

### DETAILED DESCRIPTION OF THE PREFERRED EMBODIMENT

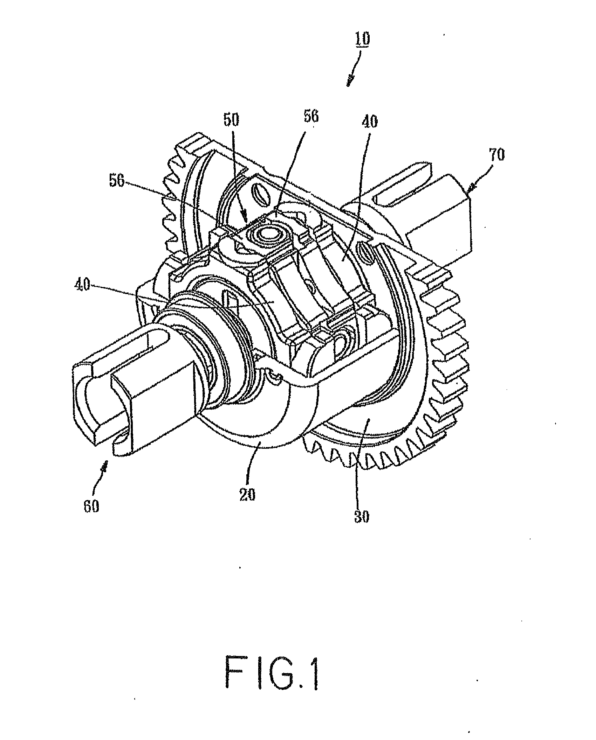

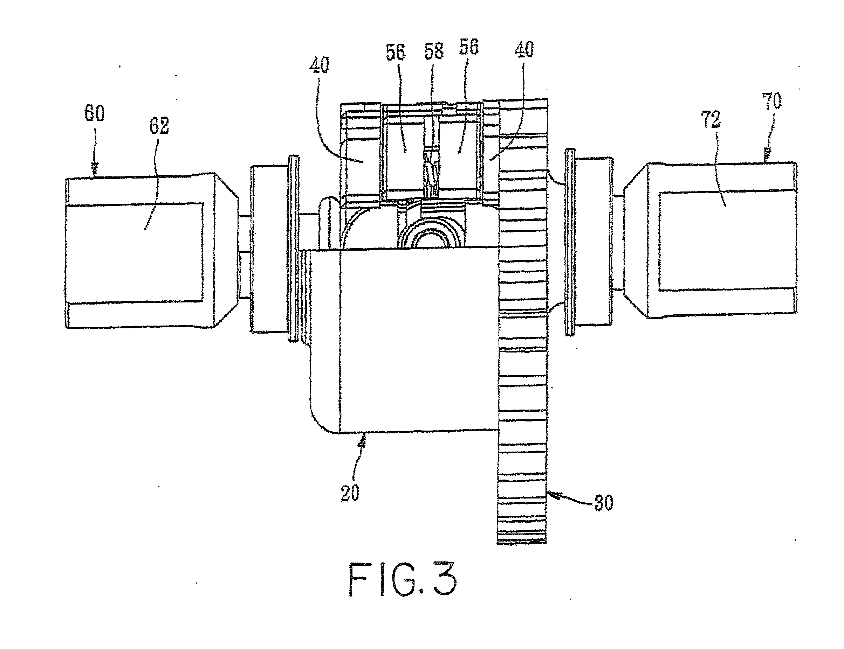

With reference to FIGS. 1 through 3, a preferred embodiment of the present invention is directed to a limited slip differential 10, preferably for remote controlled model cars (not shown), including a housing 20, a main gear 30, a pair of pressure plates 40, a differential element 50 and a pair of drive wheel shafts 60 and 70.

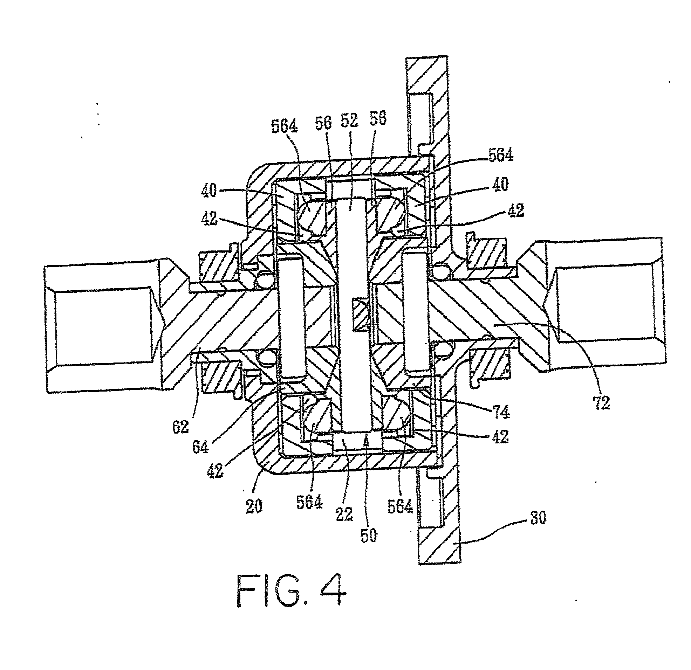

A chamber 22 is located inside the housing 20 which, as shown in FIG. 4, contains the pressure plates 40 and the differential element 50.

The main gear 30 is attached to the housing 20, and in addition, preferably seals the end of the chamber 22. Power is transmitted to the main gear 30 from the engine or other prime mover of the model car which causes the main gear 30, the housing 20 and the pressure plates 40 to rotate.

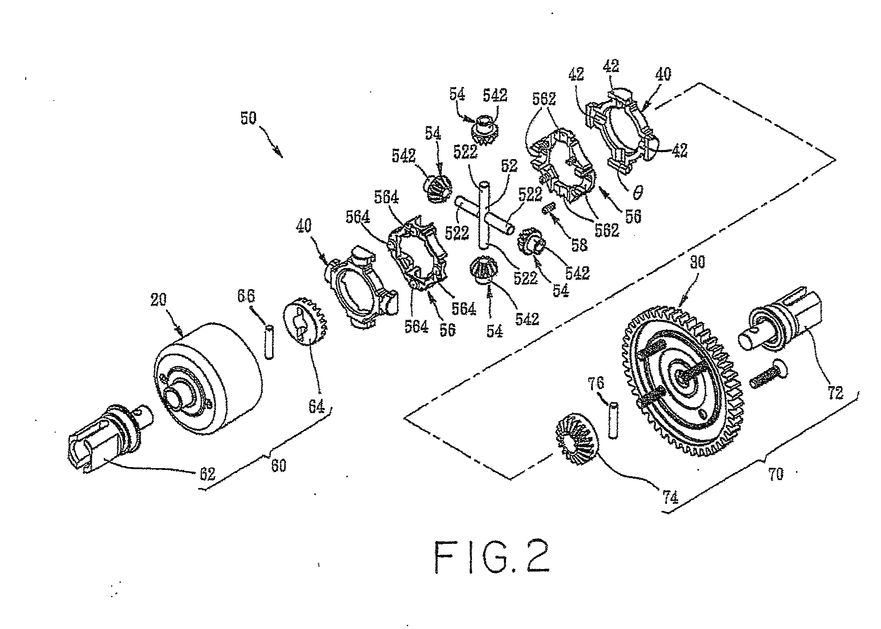

The pressure plates 40 are spaced from each other at an interval within the chamber 22 of the housing 20 and have four cruciform slide grooves 42 on each respective inner surface. The slide grooves 42 on the inner surface of one of the pressure plates 40 are parallel to the slide grooves 42 on the inner surface of the other pressure plate 40, and the slide grooves 42 on each inner surface are at a 90° angle to each other as seen in FIG. 2.

The differential element 50 is also positioned within the chamber 22 of the housing 20, and is located between the pressure plates 40. The differential element 50 includes a cruciform cross shaft 52, multiple helical gears 54, a pair of gear racks 56 and multiple elastic elements 58, such as springs, also as best seen in FIG 2. The ends 522 of the cross shaft 52 receive the helical gears 54 and their shafts 542, and the helical gears and their shafts are rotatable relative to those ends. The gear racks 56 are set in opposition to both sides of the cross shaft 52, and the respective inner surfaces of the gear racks 56 have multiple indentations 562. These indentations 562 each receive one of the shafts 542 of the helical gears 54.

The gear racks 56 also have respective multiple protrusions 564 on their outer surfaces. The protrusions 564 are received into the slide grooves 42 of the pressure plates 40, and are able to slide in these slide grooves 42 under the action of the pressure plates 40 against the gear racks 56. The elastic elements 58 are fixed at each end to the gear racks 56, and force the gear racks 56 in opposing directions.

The drive wheel shafts 60 and 70, respectively, each have a shaft wheel coupling 62, 72 for coupling the drive wheel shafts 60 and 70 to the drive wheels (not shown) of the car. The drive wheel shafts 60 and 70 also each have a transmission gear 64, 74 joined to the shaft wheel couplings 62, 72 preferably by pins 66, 76 as seen in FIG. 2. The shaft wheel couplings 62, 72 of the drive wheel shafts 60, 70, respectively pass through the housing 20, the main gear 30, the pressure plates 40 and the gear racks 56, and are meshed to the helical gears 54 via the transmission gears 64, 74. When engine power is applied to the main gear 30 and the main gear 30 and housing 20 are made to rotate, some of the power will be transferred to one of the drive wheels (not shown) via the drive wheel shaft 60, and some of the power will be transferred to the other drive wheel (not shown) via the drive wheel shaft 70.

When the model car is driven in a straight line, the limited slip differential 10 of the invention will not produce any effect because the traction on both the left and right drive wheels will be the same. In this condition, power will be supplied to the main gear 30 and housing 20 causing them to rotate and to also rotate the pressure plates 40. The protrusions 564 on the gear racks 56 will ride up in the slide grooves 42 toward the face of the pressure plates 40 causing the gear racks 56 to be pushed together thus increasing the friction on the helical gears 54. This results in a substantially direct coupling to transmit rotation through the helical gears 54 to the transmission gears 64, 74, thereby providing substantially equal driving power to each of the drive wheel shafts 60, 70 and the wheels.

When the model car is entering a turn, power is decreased to the main gear 30. This results in a reduction in torque on the gear racks 56 which causes the protrusions 564 on the gear racks to move back into the slide grooves 42 and away from the face of the pressure plates 40. This permits the elastic elements 58 to move the gear racks 56 apart which in turn reduces the friction on the shafts 542 of the helical gears 54. This substantially uncouples the power to the wheels and permits the wheels to rotate independently of each other so that the outer drive wheel which traces the wider arc in contact with the operating surface of the track can rotate faster than the inner drive wheel as the car is turning.

As the model car is exiting the turn, power is again applied to the main gear 30 causing the differential to return toward its straight line operation. More specifically, when power is reapplied to the main gear 20, the main gear is rotated as is the housing 20 and pressure plates 40. The gear racks 56 rotate due to the driving force provided by the wheels again causing the protrusions 546 on the gear racks 56 to ride up in the slide grooves 42 toward the face of the pressure plates 40. This in turn again causes the gear racks 56 to move toward each other against the force of the elastic elements 58 causing the indentations 562 on the gear racks 56 to apply friction to the shafts 542 of the helical gears. This reestablishes a substantially direct coupling of power to the wheels and results in an acceleration of the car as it comes out of the turn.

If a condition arises that one of the wheels looses traction and begins to spin or rotate in space, e.g. "duffing out" as previously discussed, in the prior differentials the power would be directed to the spinning wheel and away from the wheel which continues to have traction causing the vehicle to slow down or stop which is undesirable. However, in the differential of the present invention some power will continue to be supplied to the wheel which continues to have traction because in the friction based mechanism of the present invention, the gear racks 56 will still be close to each other so as to frictionally engage the shafts 542 of the helical gears 54 to cause some power to continue to be applied to the wheel which still has traction and is not spinning. This will substantially prevent the differential of the present invention from "diffing out".

In brief summary, in the friction based limited slip differential of the present invention, when the differential senses power from the motor or other prime mover of the model car, friction is induced due to the traction of the wheels with the track between the helical gears 54 and the gear racks to produce an essentially direct coupling of the power to the drive wheels. Conversely, when power is reduced to the differential, as when the car is entering a turn, friction between the helical gears 54 and the gear racks 56 is reduced thus substantially uncoupling power to the drive wheels to permit the wheels to track the arc which they must to achieve the turn. Moreover, because of the frictional operation of the differential of the present invention, some power continues to be supplied to the wheel which continues to enjoy traction even though the other wheel may be spinning or rotating in space to substantially reduce the possibility of "diffing out".

It should be appreciated that the angle of the slide grooves 42 of the pressure plates 40 is not necessarily limited to that described in the above embodiment, and 90° or 120° may be the optimum angle. If the angle is 120°, the differential element will more easily receive driving forces and act against the pressure plates more easily, and if the angle is 90° as seen in FIG. 2, the differential element will receive the driving forces somewhat less easily and act against the pressure plates somewhat less easily.

Although the limited slip differential of the present invention has been described herein as being employed in model cars, it will be understood that the differential may be advantageously employed in other model or full scale vehicles.

It will also be understood that the preferred embodiment of the present invention which has been described is merely illustrative of the principles of the present invention. Modifications may be made by those skilled in the art without departing from the true spirit and scope of the invention.

## Claims

1. A limited slip differential, comprising:
a housing having a chamber therein;
a main gear connected to said housing;
a pair of pressure plates positioned inside said chamber of said housing;
a differential element positioned to act against said pressure plates and located between said pressure plates, said differential element having a cross shaft, multiple helical gears, a pair of gear racks and multiple elastic elements, said cross shaft having plural ends, said helical gears being positioned at said ends of said cross shaft so as to be able to rotate, and each of said helical gears having a respective shaft, said gear racks being positioned at the opposite sides of said cross shaft, and respectively having multiple indentations, the indentations of each gear rack matching each other and positioned to receive the shafts of the helical gears, said elastic elements having ends engaging said gear racks so as to force the gear racks in opposite directions; and
a set of drive wheel shafts each respectively passing through said housing and said main gear, and each having a transmission gear, and said transmission gears mutually meshing with a helical gear of the differential element.

2. The limited slip differential as set forth in claim 1, wherein the side of each of said gear racks of said differential element opposite said cross shaft has multiple protrusions, and the side of said pressure plates facing said protrusions having multiple slide grooves receiving said protrusions so that said protrusions are able to slide in said slide grooves.

3. The limited slip differential as set forth in claim 2, wherein said slide grooves of each of said pressure plates are set at an angle to each other.

4. The limited slip differential as set forth in claim 3, wherein said slide grooves are at an angle of substantially 90° to each other.

5. The limited slip differential as set forth in claim 3, wherein said slide grooves are at an angle of substantially 120° to each other.

6. The limited slip differential as set forth in claim 1, wherein said cross shaft has four ends, and one of said helical gears is positioned on each of said ends.
